# EUROPÄISCHE PATENTSCHRIFT

(11) **EP 1 318 063 B1**
(45) Veröffentlichungstag und Bekanntmachung des Hinweises auf die Patenterteilung: **01.06.2005**
(21) Anmeldenummer: 02025027.0
(22) Anmeldetag: 11.11.2002
(51) Int. Cl.: B62D 25/04, B62D 27/02

(54) **Vorrichtung zum Fixieren eines Karosseriebauteils**
Fixing device for a body element
Dispositif de fixation d'un élément de carrosserie

(30) Priorität: 04.12.2001 DE 10159505
(43) Veröffentlichungstag der Anmeldung: 11.06.2003
(73) Patentinhaber: Dr.Ing. h.c.F. Porsche Aktiengesellschaft, 70435 Stuttgart (DE)
(72) Erfinder: Neidlein, Harald, 70197 Stuttgart (DE)

(56) Entgegenhaltungen:
- DE-C- 3 629 619
- US-A- 4 323 271
- PATENT ABSTRACTS OF JAPAN vol. 2002, no. 03, 3. April 2002 (2002-04-03) & JP 2001 310699 A (KASAI KOGYO CO LTD;NISSAN MOTOR CO LTD), 6. November 2001 (2001-11-06)

## Beschreibung

Die Erfindung bezieht sich auf eine Vorrichtung zum Fixieren eines Karosserieanbauteils nach dem Oberbegriff des Patentanspruchs 1. Eine solche Vorrichtung ist zum Beispiel aus der DE 3 629 619 C1 bekannt.

Aus der DE 197 41 538 A1 ist ein Einstellelement zur paßgenauen Montage eines Zierteiles an einem Grundteil eines Fahrzeugs bekannt, das aus einem Stellglied in Form einer Stellschraube oder eines Stellexzenters besteht. Über dieses Stellglied ist das Zierteil abstandseinstellbar, so daß eine paßgenaue Montage zum Ausgleich von Toleranzen mit insbesondere gleichmäßigen Fugenbildern möglich wird. Aus der DE 36 29 619 C1 ist eine Klemmverbindung zwischen zwei Bauteilen, nämlich einer Abdeckung an einer Mittelsäule bekannt. Zum Einstellen der Abdeckung ist ein Halteteil an der Mittelsäule vorgesehen, welches über in Längsschlitzen angeordnete Befestigungsschrauben sowie auf Schäften von Spreizdübeln verschiebend verstellbar ist.

Aufgabe der Erfindung ist es, eine Vorrichtung zum Fixieren eines Karosserieanbauteils an einem Fahrzeug zu schaffen, die aus einem einfach herzustellenden und anbringbaren Element besteht, das auch eine nachträgliche genaue Anbringung einer Blende an einer Säule eines Fahrzeugs gewährleistet.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, daß eine an einer Fahrzeugsäule von außen anbringbare Blende eine genaue Ausrichtung aufweist bzw. nachträglich genau zwischen einer vorderen Tür und einer hinteren Tür des Fahrzeugs ausgerichtet werden kann. Hierzu besteht das Einstellelement aus einer mit der Säule der Aufbaustruktur verbindbare und die Blende einseitig aufnehmende Konsole, die über Schraubmittel an der Säule festsetzbar und in Fahrzeuglängsrichtung verschiebbar gehalten ist.

Durch dieses Einstellelement ist zum einen die Blende mittenzentriert anzuordnen, aber sie kann auch entsprechend mittenzentriert angebracht werden, indem das Einstellelement gegenüber den Befestigungsschrauben verschoben wird.

Das Einstellelement besteht vorzugsweise aus einer Konsole, die gehäuseartig mit an einer Rückwand angeformten Seitenwänden sowie einer Kopfwand ausgebildet ist. Die Außenumrisse der Kopfwand sowie die Außenumrisse von von den an den Seitenwänden wegragenden Stegen entsprechen dem lichten U-förmigen Querschnitt der Säule. Durch diese vorteilhafte Ausbildung kann die Blende klemmend aufgenommen werden, da die Umrißkanten der aufnehmenden Wände bzw. der Stege der Konsole dem Innenquerschnitt der Säule entsprechen.

Eine Verschiebung des Einstellelements in Längsrichtung des Fahrzeugs sowie eine Festlegung des Elements am Fahrzeugaufbau wird dadurch erzielt, indem in der Rückwand der Konsole ein Längsschlitz angeordnet ist, indem etwa im Mittenbereich ein über eine Pendelstange mit der Rückwand verbundene und zu beiden Seiten elastisch auslenkbares hammerartiges Formteil angeordnet ist. Dieses Formteil ist in einem Freiraum der Rückwand angeordnet, der sich aus dem Längsschlitz und einem daran sich in Hochrichtung anschließenden weiteren Freiraum zusammensetzt, in welchem die Pendelstange für das Formteil zu beiden Seiten hin auslenkbar angeordnet wird.

Beim Ansetzen des Einstellelements am Fahrzeugaufbau ist aufgrund des über die Pendelstange mittig angeordneten kammerartigen Formteils eine zwangsweise Mittenzentrierung der Blende vorgegeben. Wenn die Blende aufgrund von Toleranzen in Lagern mit unterschiedlichen Fugenbreiten zwischen den Türen angeordnet ist, wird das Einstellelement in Fahrzeuglängsrichtung verschoben. Dies kann durch Druckausübung auf das Einstellelement erfolgen, ohne daß unbedingt die Befestigungsschrauben gelöst werden müssen.

Die Befestigungsschrauben sind vorzugsweise zu beiden Seiten des hammerartigen Formelements unmittelbar anliegend angeordnet und die Konsole ist auf den Schrauben mittenzentriert gehalten. Zudem sind die Köpfe der Schrauben zwischen seitlich begrenzenden Führungsstegen angeordnet, die jeweils beabstandet zum Längsschlitz verlaufen.

Hierdurch wird zum einen eine feste abgestützte Anbindung des Einstellelements am Fahrzeugaufbau erzielt und zum anderen sind die Schraubenköpfe der Befestigungsschrauben zwischen vorragenden Stegen geführt, so daß kein Abkippen des Elements erfolgen kann.

Ein Ausführungsbeispiel der Erfindung ist in den Zeichnungen dargestellt und wird im folgenden näher beschrieben.

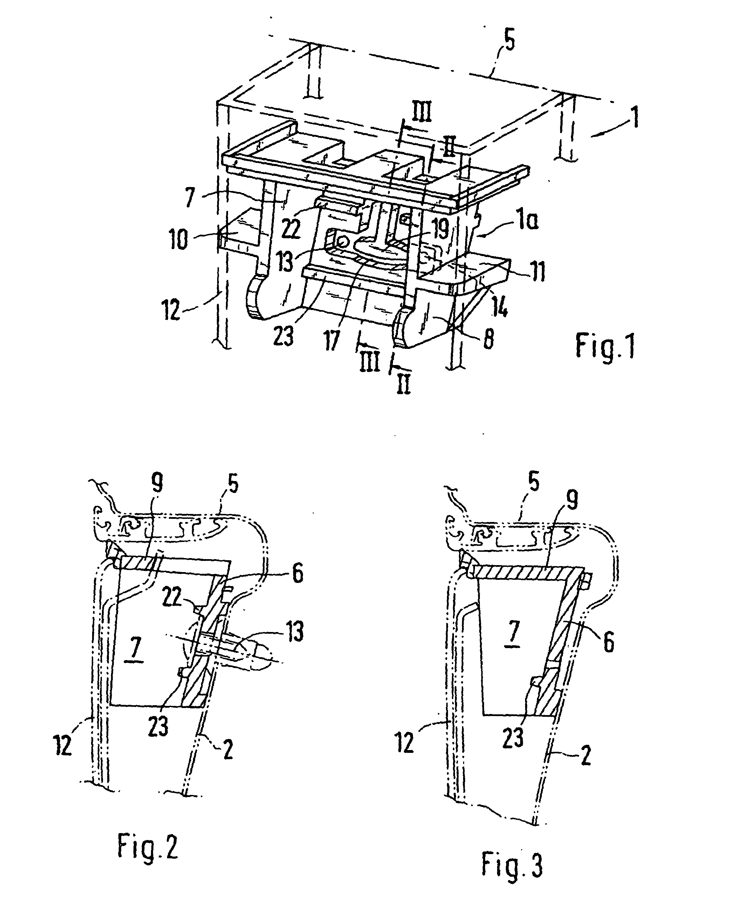

Es zeigen
- Fig. 1: eine schaubildliche Darstellung eines Einstellelements, im wesentlichen bestehend aus einer gehäuseartigen Konsole,
- Fig. 2: einen Schnitt nach der Linie II-II der Fig. 1 durch das Einstellelement,
- Fig. 3: einen Schnitt nach der Linie III-III der Fig. 1 durch das Einstellelement und

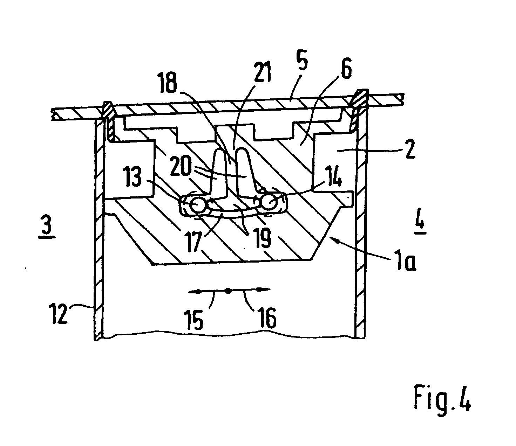

- Fig. 4: einen Vertikalschnitt durch das Einstellelement im Bereich der Rückwand der Konsole.

Das Einstellelement 1 ist beispielsweise an einer B-Säule 2 eines Fahrzeugs zwischen einer vorderen Tür 3 und einer hinteren Tür 4 vorgesehen. Insbesondere wird das Einstellelement 1 oberhalb der B-Säule 2 und unterhalb der Dachkante 5 außenseitig der B-Säule 2 angebracht.

Das Einstellelement 1 besteht im wesentlichen aus einer gehäuseartigen Konsole 1a mit einer an der Säule 2 anliegenden Rückwand 6 sowie nach außen abstehenden Seitenwänden 7 und 8 und einer oberen Kopfwand 9. Dieser ragt über die Seitenwände 7, 8 seitlich heraus und bildet mit von den Seitenwänden abkragenden Stegen 10, 11 Umrißkanten, die dem U-Profilquerschnitt einer aufzusetzenden Blende 12 entsprechen.

Die Konsole 1a ist über Schraubmittel, wie beispielsweise zwei Befestigungsschrauben 13, 14 an der Säule 2 gehalten und auf diesen in Pfeilrichtungen 15, 16 in Fahrzeuglängsrichtung verschiebbar. Hierzu ist in der Rückwand 6 der Konsole 1a ein Längsschlitz 17 vorgesehen, in dem die Befestigungsschrauben 13, 14 angeordnet sind und der im Mittenbereich ein über eine Pendelstange 18 mit der Rückwand 6 verbundenes hammerartiges Formteil 19 aufweist.

Dieses Formteil 19 ist in einem Freiraum der Rückwand 6 angeordnet, der sich zum einen aus dem Längsschlitz 17 und zum anderen aus einem sich in Hochrichtung anschließenden weiteren Freiraum 20 für die Pendelstange 8 zusammensetzt. Diese ist mit einem Ende 21 an der Rückwand 6 angebunden und bewirkt eine elastische Auslenkbarkeit in Grenzen des Freiraumes 20.

Die Befestigungsschrauben 13, 14 sind mit ihrem Schaft jeweils im Längsschlitz 17 unmittelbar anliegend an den freien Enden des hammerartigen Formteils 19 angeordnet, wobei die Schraubenköpfe einen Endteil des Formteils 19 überdecken. Zudem sind die Köpfe der Schrauben 13, 14 zwischen dem Längsschlitz 17 seitlich begrenzenden Führungsstegen 22, 23 gehalten, die den Längsschlitz 17 jeweils seitlich beabstandet begrenzen.

Das Einstellen einer auf der Säule 2 aufgesetzten U-profilförmigen Blende 12 zwischen der Vordertür 3 und der Hintertür 4 erfolgt in der Weise, daß das Einstellelement 1 über die Schrauben 13, 14 an der B-Säule befestigt wird. Das Element 1 ist so angebracht, daß die Blende 12 mittenzentriert angeordnet ist wobei das hammerartige Formteil 19 über die Pendelstange 18 zwischen den Schrauben 13, 14 in einer sogenannten Nullage aufgenommen wird. Wenn sich beim Aufklemmen des oberen Endes der Blende 12 nach dem Einbau der Türen 3, 4 ein unterschiedliches Fugenbild ergibt, wird das Einstellelement 1 entsprechend in Pfeilrichtungen 15, 16 verschoben, so daß eine genaue Fixierung der Blende 12 mit einem an beiden Seiten gleichen Fugenbild erzielt wird. Das Ausrichten des Einstellelements 1 kann durch sogenannte Druckausübung auf das Element 1 erfolgen.

## Patentansprüche

1. Vorrichtung zum Fixieren einer Außenblende an einer Fahrzeugsäule mit einem Einstellelement, das aus einem mit der Säule der Aufbaustruktur verbindbaren Konsole besteht, die über Schraubmittel an der Aufbaustruktur festsetzbar und zum Einstellen verschiebbar gehalten ist, **dadurch gekennzeichnet, dass** die Konsole (1a) gehäuseartig mit an einer Rückwand (6) angeformten Seitenwänden (7, 8) sowie einer Kopfwand (9) ausgebildet ist und in der Rückwand (6) der Konsole (1a) ein Längsschlitz (17) angeordnet ist, in dem etwa im Mittenbereich ein über eine Pendelstange (18) mit der Rückwand (6) verbundenes und zu beiden Seiten elastisch auslenkbares hammerartiges Formteil (19) angeordnet ist und zu beiden Seiten des hammerartigen Formteils (19) unmittelbar anliegend Einstellschrauben (13, 14) angeordnet sind und die Konsole (1a) auf diesen Schrauben (13, 14) mittenzentriert gehalten ist.

2. Vorrichtung nach Anspruch 1, **dadurch gekennzeichnet, dass** die Außenumrisse der Kopfwand (9) und die Außenumrisse von den Seitenwänden (7, 8) wegragenden Stegen (10, 11) dem lichten U-förmigen Querschnitt der Säule (2) entsprechen.

3. Vorrichtung nach den Ansprüchen 1 oder 2, **dadurch gekennzeichnet, daß** das hammerartige Formteil (19) in einem Freiraum der Rückwand (6) angeordnet ist, der sich aus dem Längsschlitz (17) und einem daran sich in Hochrichtung anschließenden weiteren Freiraum (20) zusammensetzt, in welchem die Pendelstange (18) für das Formteil (19) zu beiden Seiten auslenkbar angeordnet ist.

4. Vorrichtung nach einem oder mehreren der vorhergehenden Ansprüche, **dadurch gekennzeichnet, daß** die Köpfe der Schrauben (13, 14) zwischen begrenzenden Führungsstegen (22, 23) angeordnet sind, die jeweils beabstandet zum Längsschlitz (17) verlaufen.

## Claims

1. A device for fixing an outer screen to a pillar of a vehicle, having an adjustment element which comprises a bracket which can be connected to the pillar of the body structure and which is held on the body structure by way of bolting means so that it can be fixed and can be displaced for adjustment purposes, **characterized in that** the bracket (1a) is designed in the manner of a housing with lateral walls (7, 8) formed integrally on a rear wall (6) as well as with a head wall (9), and a longitudinal slot (17), in which a hammer-like moulded part (19) connected to the rear wall (6) of the bracket (1a) by way of a pendulum rod (18) and resiliently deflectable on both sides, is arranged in the rear wall (6), and on both sides of the hammer-like moulded part (19) adjustment screws (13, 14) are arranged so as to be directly adjacent, and the bracket (1a) is centred in the middle on the said screws (13, 14).

2. A device according to Claim 1, **characterized in that** the external outlines of the head wall (9) and the external outlines of webs (10, 11) extending away from the lateral walls (7, 8) correspond to the internal U-shaped cross-section of the pillar (2).

3. A device according to Claims 1 or 2, **characterized in that** the hammer-like moulded part (19) is arranged in a free space in the rear wall (6), which free space is formed by the longitudinal slot (17) and a further free space (20) which adjoins the longitudinal slot (17) in the vertical direction and in which the pendulum rod (18) for the moulded part (19) is arranged so as to be deflectable on both sides.

4. A device according to one or more of the preceding Claims, **characterized in that** the heads of the screws (13, 14) are arranged between adjacent guide webs (22, 23) which extend at a distance from the longitudinal slot (17) in each case.

## Revendications

1. Dispositif de fixation d'un écran extérieur sur une colonne de véhicule automobile avec un élément de réglage se composant d'une console, qui peut être reliée avec la colonne de la structure de la carrosserie et qui peut être fixée par l'intermédiaire de moyens de vissage sur la structure de la carrosserie en étant maintenue de manière coulissante pour le réglage, **caractérisé en ce que** la console (1a) est configurée à la manière d'un boîtier avec des parois latérales (7, 8) formées sur une paroi arrière (6) ainsi qu'avec une paroi frontale (9), **en ce que** dans la paroi arrière (6) de la console (1a) est disposée une fente longitudinale (17) dans laquelle, à peu près dans la zone centrale, est disposée une pièce préformée en forme de marteau (19) reliée par l'intermédiaire d'une barre oscillante (18) avec la paroi arrière (6) et pouvant être déviée de manière élastique vers les deux côtés, **en ce qu'**en contact direct des deux côtés de la pièce préformée en forme de marteau (19) sont disposées des vis de réglage (13, 14) et **en ce que** la console (1a) est maintenue sur ces vis (13, 14) avec un centrage au milieu.

2. Dispositif selon la revendication 1, **caractérisé en ce que** les contours extérieurs de la paroi frontale (9) et les contours extérieurs de nervures (10, 11) s'écartant des parois latérales (7, 8) correspondent à la section intérieure en forme de U de la colonne (2).

3. Dispositif selon les revendications 1 ou 2, **caractérisé en ce que** la pièce préformée en forme de marteau (19) est disposée dans un espace libre de la paroi arrière (6) se composant de la fente longitudinale (17) et d'un autre espace libre (20) qui s'y raccorde dans le sens de la hauteur et dans lequel la barre oscillante (18) pour la pièce préformée (19) est disposée de manière à pouvoir être déviées vers les deux côtés.

4. Dispositif selon l'une quelconque ou plusieurs des revendications précédentes, **caractérisé en ce que** les têtes des vis (13, 14) sont disposées entre des nervures de guidage (22, 23) assurant une délimitation et s'étendant avec respectivement un espacement par rapport à la fente longitudinale (17).
